# FASCICULE DE BREVET EUROPEEN

(11) **EP 4 345 009 B1**
(45) Date de publication et mention de la délivrance du brevet: **30.07.2025**
(21) Numéro de dépôt: 23199830.3
(22) Date de dépôt: 26.09.2023
(51) Int. Cl.: B64D 37/30, B64D 37/32, B64D 29/06, B64D 45/00, F02C 3/22, F02C 7/25

(54) **ENSEMBLE PROPULSIF POUR AÉRONEF**
ANTRIEBSEINHEIT FÜR EIN FLUGZEUG
PROPULSION ASSEMBLY FOR AIRCRAFT

(30) Priorité: 30.09.2022 FR 2209988
(43) Date de publication de la demande: 03.04.2024
(73) Titulaire: Airbus, 31700 Blagnac (FR); AIRBUS OPERATIONS, 31060 Toulouse Cedex 9 (FR)
(72) Inventeur: CZAPLA, Lionel, 31060 TOULOUSE (FR); PISSAVIN, Alexis, 31700 BLAGNAC (FR)
(74) Mandataire: Cabinet Le Guen Maillet

(56) Documents cités:
- DE-A1- 2 413 507
- JP-A- 2008 116 197
- US-A- 5 953 900
- US-A1- 2009 178 411
- US-A1- 2022 307 428
- US-B1- 6 276 141

## Description

### DOMAINE TECHNIQUE

La présente invention concerne un ensemble propulsif pour un aéronef, ledit ensemble propulsif comprenant un châssis fixé à une structure d'une voilure de l'aéronef, un système de motorisation tel qu'un turbopropulseur, fixé au châssis, une canalisation de dihydrogène qui alimente la chambre de combustion du système de motorisation avec ledit dihydrogène au niveau d'injecteurs et un boîtier de protection fixé de manière étanche autour de la chambre de combustion et englobant la canalisation de dihydrogène et les injecteurs. L'invention concerne également un aéronef comportant au moins un tel ensemble propulsif.

### ÉTAT DE LA TECHNIQUE ANTÉRIEURE

Afin de se déplacer, un aéronef comporte classiquement au moins un ensemble propulsif comprenant un système de motorisation tel qu'un turbopropulseur. Un tel système de motorisation comporte un noyau qui est enfermé dans un carter et qui comporte entre autres de l'amont vers l'aval, un compresseur, une chambre de combustion et une turbine. Le système de motorisation comporte également une hélice entraînée en rotation par le noyau. Le compresseur et la turbine possèdent chacun des aubes qui sont fixées à un arbre rotatif. L'ensemble propulsif comporte également un châssis qui est fixé à une structure de l'aile de l'aéronef et constitue ainsi un mât d'accrochage sous l'aile.

Pour limiter la pollution due à l'utilisation de kérosène, il est envisagé d'utiliser le dihydrogène comme carburant dans la chambre de combustion.

Ce dihydrogène est amené depuis un réservoir jusqu'à la chambre de combustion par une canalisation de dihydrogène qui s'étend au moins en partie dans l'ensemble propulsif. Du fait de la structure de l'ensemble propulsif et de sa position sous l'aile et sur l'avant de l'aile, la canalisation de dihydrogène traverse le châssis en provenant de l'aile et court ainsi de l'arrière vers l'avant jusqu' à la chambre de combustion.

Pour limiter l'impact de la température du noyau sur la canalisation de dihydrogène, celle-ci court à l'extérieur du carter pour rejoindre la chambre de combustion à travers le carter au niveau d'un ou plusieurs injecteurs.

En cas d'incident au niveau de la canalisation de dihydrogène ou des injecteurs, il est nécessaire de prévoir des systèmes de sécurité.

Les documents DE-A-24 13 507 et US-A-2009/178411 divulguent des ensembles propulsifs de l'état de la technique.

### EXPOSÉ DE L'INVENTION

Un objet de la présente invention est de proposer un ensemble propulsif qui comporte un boîtier fixé de manière étanche autour de la chambre de combustion et englobant la canalisation de dihydrogène et les injecteurs afin de limiter la propagation du dihydrogène en cas d'incident.

À cet effet, est proposé un ensemble propulsif pour un aéronef comportant :
- un système de motorisation comportant un noyau enfermé dans un carter et comportant une chambre de combustion,
- au moins une canalisation d'alimentation destinée à acheminer du dihydrogène jusqu'à la chambre de combustion où ladite au moins une canalisation d'alimentation serpente à l'extérieur du carter avant de plonger dans la chambre de combustion à travers le carter par l'intermédiaire d'au moins un injecteur, et
- un boîtier fixé au carter de manière étanche autour de celui-ci,
où ladite au moins une canalisation d'alimentation comporte une partie amont et une partie aval fluidiquement connectées l'une à l'autre à travers une paroi du boîtier, où la partie amont est destinée à être fluidiquement connectée à un réservoir et fixée de manière étanche à ladite paroi du boîtier et où la partie aval est logée à l'intérieur du boîtier et fixée de manière étanche à ladite paroi du boîtier et où le au moins un injecteur est également logé à l'intérieur du boîtier.

Avec un tel arrangement, le dihydrogène se trouve confiné dans le boîtier. Avantageusement, l'ensemble propulsif comporte au moins un détecteur de dihydrogène arrangé dans le boîtier, une unité de contrôle connectée audit au moins un détecteur et une électrovanne montée sur la canalisation d'alimentation et commandée en ouverture et en fermeture par ladite unité de contrôle en fonction des données transmises par ledit au moins un détecteur.

Selon un mode de réalisation particulier, le boîtier est constitué de deux coques qui sont fixées de manière étanche l'une à l'autre au niveau d'un plan médian vertical P de l'ensemble propulsif formant ainsi un volume entre les deux coques et le carter.

Selon un mode de réalisation particulier, le boîtier est constitué de deux coques où chacune est fixée de manière étanche au carter au niveau d'un plan parallèle à un plan médian vertical P de l'ensemble propulsif formant entre chaque coque et le carter, un volume.

Avantageusement, ladite ou chaque partie aval est fluidiquement connectée à une partie amont par plusieurs zones de connexion.

Avantageusement, le boîtier est rempli de diazote.

Avantageusement, pour chaque volume, l'ensemble propulsif comporte une canalisation d'entrée et une canalisation de sortie fluidiquement connectées audit volume, où la canalisation d'entrée est destinée à introduire le diazote dans ledit volume et où la canalisation de sortie est destinée à extraire le diazote dudit volume.

Avantageusement, l'ensemble propulsif comporte pour chaque volume, au moins un moyen d'allumage logé dans ledit volume et commandé par l'unité de contrôle pour générer une étincelle lorsqu'un détecteur de dihydrogène dudit volume détecte du dihydrogène. L'invention propose également un aéronef comportant une aile, un réservoir de dihydrogène, au moins un ensemble propulsif selon l'une des variantes, et pour chaque ensemble propulsif, un châssis où l'ensemble propulsif est fixé au châssis qui est fixé à l'aile et où ladite au moins une canalisation d'alimentation est fluidiquement connectée au réservoir de dihydrogène.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef comportant un ensemble propulsif selon l'invention,
Fig. 2 est une représentation schématique de côté d'un système de motorisation de l'ensemble propulsif selon l'invention,
Fig. 3 est une représentation schématique en coupe selon la ligne III-III d'un ensemble propulsif selon une première variante de réalisation de l'invention,
Fig. 4 est une représentation schématique en coupe selon la ligne III-III d'un ensemble propulsif selon une deuxième variante de réalisation de l'invention,
Fig. 5 est une représentation schématique en coupe selon la ligne III-III d'un ensemble propulsif selon une troisième variante de réalisation de l'invention,
Fig. 6 est une représentation schématique en coupe selon la ligne III-III d'un ensemble propulsif selon une quatrième variante de réalisation de l'invention,
Fig. 7 est une représentation schématique en coupe selon la ligne III-III d'un ensemble propulsif selon une cinquième variante de réalisation de l'invention, et
Fig. 8 est une représentation schématique d'une connexion mise en œuvre dans l'invention.

### EXPOSÉ DÉTAILLÉ DE MODES DE RÉALISATION

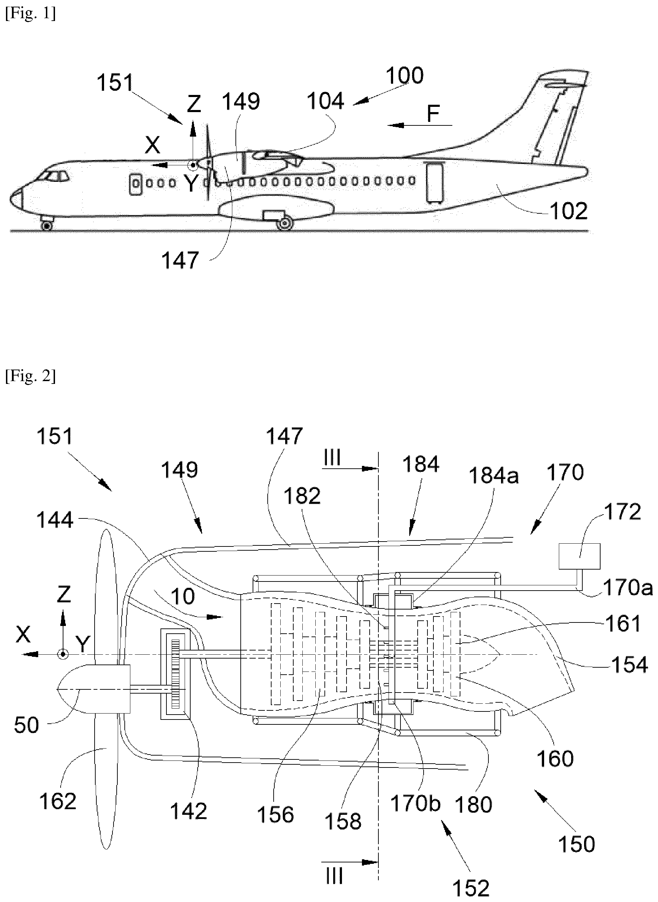

Dans la description qui suit, les termes relatifs à une position sont pris en référence à un aéronef en position d'avancement, c'est-à-dire comme il est représenté sur la Fig. 1 où la flèche F montre la direction d'avancement de l'aéronef.

Dans la description qui suit, et par convention, on appelle X l'axe longitudinal du système de motorisation qui est parallèle à l'axe longitudinal de l'aéronef orienté positivement vers l'avant dans le sens d'avancement de l'aéronef, on appelle Y l'axe transversal qui est horizontal lorsque l'aéronef est au sol, et Z l'axe vertical ou hauteur verticale lorsque l'aéronef est au sol, ces trois axes X, Y et Z étant orthogonaux entre eux.

La Fig. 1 montre un aéronef 100 qui présente un fuselage 102 de part et d'autre duquel est fixée une aile 104. Sous chaque aile 104 est fixé au moins un ensemble propulsif 151 qui comporte une nacelle 149 constituée de capots 147 formant une surface extérieure aérodynamique.

La Fig. 2 montre l'ensemble propulsif 151 qui comporte également un système de motorisation 150 qui est représenté de manière schématique.

Pour chaque ensemble propulsif 151, l'aéronef 100 comporte un châssis 180 auquel l'ensemble propulsif 151 est fixé et qui est fixé à une structure de l'aile 104. Le châssis 180 constitue un mât d'accrochage. Dans le mode de réalisation de l'invention présenté à la Fig. 2, le châssis 180 prend la forme d'une cage constituée, entre autres, de poutres fixées les unes aux autres. Le châssis 180 est fixé à la structure de l'aile par des moyens de fixation connus de l'homme du métier.

Dans le mode de réalisation de l'invention présenté à la Fig. 2, le système de motorisation 150 est un turbopropulseur qui comporte un noyau 152 qui est enfermé dans un carter 154. Dans le mode de réalisation de l'invention présenté à la Fig. 2, le carter 154 est logé à l'intérieur du châssis 180 formant une cage et il y est fixé par tous moyens appropriés connus de l'homme du métier.

De l'air extérieur pénètre dans la nacelle 149 à travers une ouverture 144 prévue dans les capots 147 à l'avant de la nacelle 149.

À l'intérieur de la nacelle 149, le flux d'air primaire 10 pénètre dans le noyau 152 pour alimenter la chambre de combustion 158 en dioxygène.

Le carter 154 est ainsi ouvert à l'avant pour permettre l'introduction du flux primaire 10 dans le noyau 152 et ouvert à l'arrière pour permettre l'échappement des gaz issus de la combustion à travers une tuyère. Le noyau 152 comporte de l'amont vers l'aval, un compresseur 156, une chambre de combustion 158 et une turbine 160. Le compresseur 156 et la turbine 160 sont munis d'aubes 161 rotatives autour de l'axe longitudinal X.

Le flux primaire 10 passe ainsi successivement à travers le compresseur 156 où il est comprimé avant d'être injecté dans la chambre de combustion 158 où il est mélangé au carburant. Les gaz issus de la combustion passent ensuite à travers la turbine 160 et l'entraînent en rotation. La turbine 160 entraîne alors à son tour le compresseur 156 en rotation et les gaz sont ensuite éjectés à l'arrière.

Le système de motorisation 150 comporte une hélice 162 qui est à l'avant et entraînée en rotation par la turbine 160. Dans le mode de réalisation de l'invention présenté ici, le système de motorisation 150 comporte également une boîte de vitesse 142 montée entre la turbine 160 et l'hélice 162 qui tourne autour d'un axe de rotation 50 parallèle à l'axe longitudinal X et qui est ici décalée par rapport à l'axe longitudinal X.

L'ensemble propulsif 151 comporte également au moins une canalisation d'alimentation 170 qui permet d'acheminer du dihydrogène comme carburant jusqu'à la chambre de combustion 158 en étant fluidiquement connectée à un réservoir de dihydrogène 172 de l'aéronef 100. Ladite au moins une canalisation d'alimentation 170 serpente ainsi à l'extérieur du carter 154 avant de plonger dans la chambre de combustion 158 à travers le carter 154 par l'intermédiaire d'au moins un injecteur 182.

En cas d'incident sur le système de motorisation 150, il peut y avoir des fuites de dihydrogène au niveau de la canalisation d'alimentation 170 et/ou des injecteurs 182.

Pour éviter que le dihydrogène ne se répande partout, l'ensemble propulsif 151 comporte un boîtier 184 qui est fixé au carter 154 de manière étanche autour de celui-ci et où les injecteurs 182 et au moins une partie de la canalisation d'alimentation 170 sont enfermés dans ledit boîtier 184. Le boîtier 184 est ainsi arrangé autour de la chambre de combustion 158.

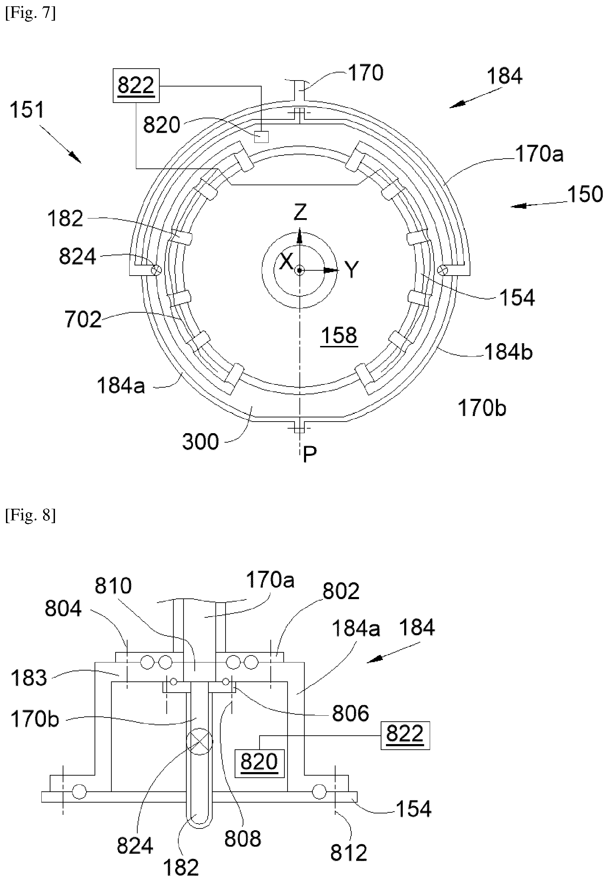

D'une manière générale, ladite au moins une canalisation d'alimentation 170 comporte ainsi une partie amont 170a et une partie aval 170b fluidiquement connectées l'une à l'autre à travers une paroi (183, Fig. 8) du boîtier 184.

La partie amont 170a est fluidiquement connectée au réservoir 172 et fixée de manière étanche à la paroi 183 du boîtier 184 et la partie aval 170b qui est logée à l'intérieur du boîtier 184 est fixée de manière étanche à la paroi 183 du boîtier 184. La partie aval 170b s'étend jusqu'aux injecteurs 182 qui sont également logés dans le boîtier 184.

Ainsi, en cas d'incident sur la partie aval 170b ou les injecteurs 182, le dihydrogène reste confiné dans le boîtier 184 et différentes mesures peuvent être prises pour limiter la concentration de dihydrogène dans le boîtier 184 ou le risque d'explosion.

La Fig. 8 montre un exemple de jonction étanche entre la partie amont 170a et la paroi 183 du boîtier 184, d'une part, et entre la partie aval 170b et la paroi 183 du boîtier 184, d'autre part, au niveau du passage à travers la paroi 183 du boîtier 184.

La partie amont 170a est solidaire d'une bride 802 qui est fixée à la face extérieure de la paroi 183 par des moyens de fixation 804 tels que des vis de serrage. De la même manière, la partie aval 170b est solidaire d'une bride 806 qui est fixée à la face intérieure de la paroi 183 par des moyens de fixation 808 tels que des vis de serrage.

La partie amont 170a et la partie aval 170b sont en communication fluidique par l'intermédiaire d'un alésage 810 qui traverse la paroi 183 entre ses deux faces.

Des joints tels que des joints toriques sont mis en place entre la paroi 183 et chaque bride 802, 806.

La Fig. 8 montre également un exemple de fixation du boîtier 184 au carter 154. Le boitier 184 est fixé contre le carter 154 par des moyens de fixation 812 comme par exemple des vis de serrage et des joints tels que des joints toriques sont arrangés entre le carter 154 et le boîtier 184.

Pour arrêter l'arrivée de dihydrogène dans la partie aval 170b, l'ensemble propulsif 151 comporte au moins un détecteur de dihydrogène 820 qui est arrangé dans le boîtier 184 et connecté à une unité de contrôle 822 qui elle-même contrôle en ouverture et en fermeture, une électrovanne 824 montée sur la canalisation d'alimentation 170. L'électrovanne 824 est ici montée sur la partie aval 170b, mais elle peut également être montée sur la partie amont 170a. Ainsi, en fonction des données transmises par ledit au moins un détecteur 820, l'unité de contrôle 822 va commander l'ouverture (lorsque le dihydrogène n'est pas détecté) ou la fermeture (lorsque le dihydrogène est détecté) de l'électrovanne 824.

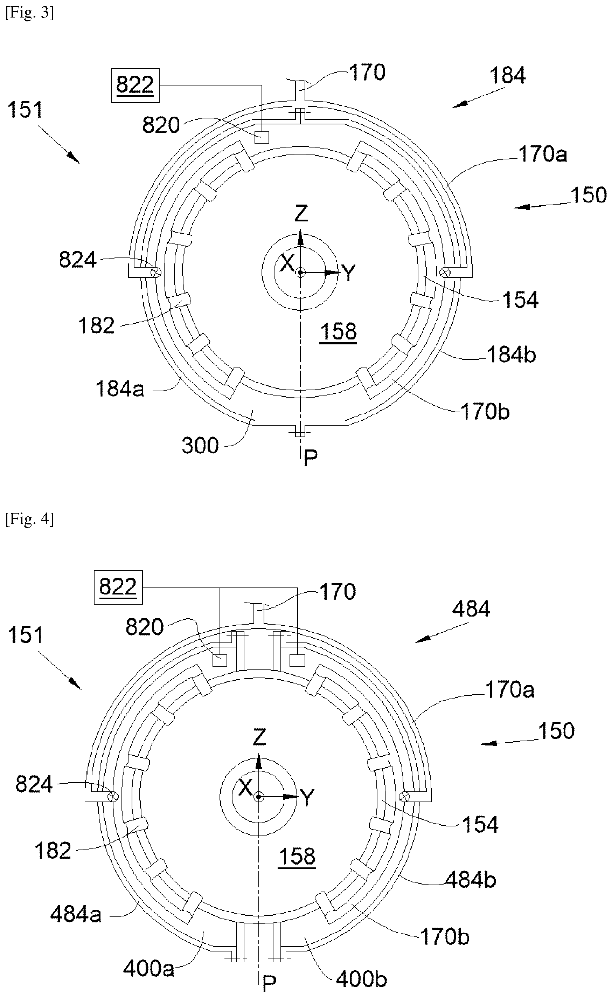

La Fig. 3 montre un premier mode de réalisation de l'invention, dans lequel le boîtier 184 est constitué de deux coques 184a-b qui sont fixées de manière étanche l'une à l'autre au niveau d'un plan médian vertical P (XZ) de l'ensemble propulsif 151 de manière à former une couronne fermée autour du carter 154. La fixation des deux coques 184a-b est réalisée à l'aide de moyens de solidarisation tels que des vis de serrage, des rivets, etc. Les deux coques 184a-b délimitent avec le carter 154, un seul volume 300.

Sur la Fig. 2, la coque 184b a été retirée pour laisser voir la canalisation d'alimentation 170 et les injecteurs 182.

Dans le mode de réalisation de l'invention présenté à la Fig. 3, il y a deux parties aval 170b qui sont disposées respectivement à bâbord et à tribord et chacune est reliée à une partie amont 170a respectivement à bâbord et à tribord, et il y a également une électrovanne 824 pour chaque partie aval 170b. Les deux parties aval 170b, les injecteurs 182 et ici les deux électrovannes 824 sont logés dans le volume 300.

La Fig. 4 montre un deuxième mode de réalisation de l'invention, dans lequel le boîtier 484 est constitué de deux coques 484a-b qui sont séparées l'une de l'autre, et chacune est fixée de manière étanche au carter 154 au niveau d'un plan parallèle au plan médian vertical P (XZ) de l'ensemble propulsif 151. Il y a ainsi une coque 484a à bâbord et une coque 484b à tribord. La fixation des deux coques 484a-b au carter 154 est réalisée à l'aide de moyens de solidarisation tels que des vis de serrage, des rivets, etc. Chaque coque 484a-b et le carter 154 délimitent entre eux un volume 400a-b et il y a ainsi deux volumes 400a-b distincts.

Dans le mode de réalisation de l'invention présenté à la Fig. 4, il y a deux parties aval 170b qui sont disposées à bâbord et à tribord et chacune est reliée à une partie amont 170a respectivement à bâbord et à tribord, et il y a également une électrovanne 824 pour chaque partie aval 170b.

Chaque volume 400a-b permet de loger une des deux parties aval 170b, les injecteurs 182 associés et une des deux électrovannes 824. Dans ce mode de réalisation, il y a au moins un détecteur de dihydrogène 820 dans chaque volume 400a-b.

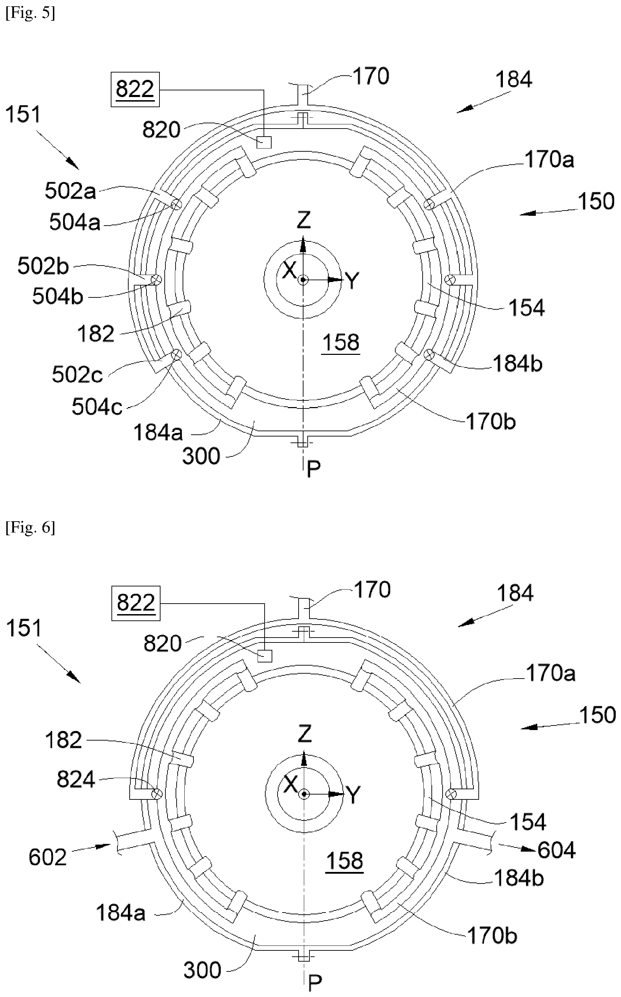

La Fig. 5 montre un troisième mode de réalisation de l'invention, dans lequel le boîtier 184 est similaire à celui du premier mode de réalisation représenté à la Fig. 3, mais qui pourrait prendre une forme similaire au boîtier 484 du deuxième mode de réalisation représenté à la Fig. 4.

Dans le troisième mode de réalisation, il y a deux parties aval 170b, une à bâbord et une à tribord, et chacune est fluidiquement connectée à une partie amont 170a par plusieurs zones de connexion 502a-c, ici au nombre de trois par partie aval 170b, et ici chaque zone de connexion 502a-c est équipée d'une électrovanne 504a-c commandée par l'unité de contrôle 822.

D'une manière générale, pour limiter la concentration de dihydrogène dans le boîtier 184, 484, il est possible de remplir ledit boîtier 184, 484 avec un gaz inerte par rapport au dihydrogène, comme du diazote par exemple. Ce mode de réalisation particulier s'applique à tous les modes de réalisation décrits ci-dessus.

La Fig. 6 montre un quatrième mode de réalisation de l'invention, dans lequel le boîtier 184 est similaire à celui du premier mode de réalisation représenté à la Fig. 3, mais qui pourrait prendre une forme similaire au boîtier 484 du deuxième mode de réalisation représenté à la Fig. 4. Ce quatrième mode de réalisation peut s'appliquer également au troisième mode de réalisation de la Fig. 5.

D'une manière générale, pour chaque volume 300, 400a-b, l'ensemble propulsif 151 comporte une canalisation d'entrée 602 par laquelle le diazote est introduit dans ledit volume 300, 400a-b et une canalisation de sortie 604 par laquelle le diazote est extrait dudit volume 300, 400a-b.

Chaque canalisation 602, 604 est fluidiquement connectée au volume 300, 400a-b considéré à travers la paroi du boîtier 184, 484.

La canalisation d'entrée 602 est fluidiquement connectée à un réservoir de diazote et à une pompe qui entraîne le diazote dans la canalisation d'entrée 602 jusque dans le boîtier 184, 484 afin de générer un courant de diazote dans le boîtier 184, 484 et le diazote en surpression s'évacue par la canalisation de sortie 604 et rejoint par exemple le réservoir de diazote.

Dans le cas du deuxième mode de réalisation de l'invention présenté à la Fig. 4, il y a une canalisation d'entrée et une canalisation de sortie par coque 484a-b afin de générer un courant de diazote dans chaque coque 484a-b du boîtier 484.

La Fig. 7 montre un cinquième mode de réalisation de l'invention, dans lequel le boîtier 184 est similaire à celui du premier mode de réalisation représenté à la Fig. 3, mais qui pourrait prendre une forme similaire au boîtier 484 du deuxième mode de réalisation représenté à la Fig. 4. Ce cinquième mode de réalisation peut s'appliquer également au troisième mode de réalisation de la Fig. 5.

Pour limiter la concentration de dihydrogène dans chaque volume 300, 400a-b, l'ensemble propulsif 151 comporte pour chaque volume 300, 400a-b, au moins un moyen d'allumage 702 qui est logé dans ledit volume 300, 400a-b et qui est commandé par l'unité de contrôle 822. Le moyen d'allumage 702 génère au moins une étincelle qui embrase le dihydrogène afin de le brûler sans qu'il explose. Ainsi, lorsque du dihydrogène est détecté dans un volume 300, 400a-b par un détecteur de dihydrogène 820 dudit volume 300, 400a-b, l'unité de contrôle 822 commande le moyen d'allumage 702 logé dans ledit volume 300, 400a-b pour qu'il génère une étincelle dans ledit volume 300, 400a-b.

Dans les différents modes de réalisation de l'invention présentés ici, il y a une seule rampe d'injecteur par côté, mais il est possible d'en avoir plusieurs par côté disposés les uns à la suite des autres le long de l'axe longitudinal X et logés dans le même boîtier.

Selon un mode de réalisation, l'unité de contrôle 822 comporte, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais) ; une unité de stockage telle qu'un disque dur ou un lecteur de support de stockage, tel qu'un lecteur de cartes SD (« Secure Digital » en anglais) ; au moins une interface de communication, permettant par exemple à l'unité de contrôle de communiquer avec les électrovannes, les détecteurs, les moyens d'allumage, etc.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits.

Tout ou partie des algorithmes et étapes décrits ci-après peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Ensemble propulsif (151) pour un aéronef (100) comportant :
- un système de motorisation (150) comportant un noyau (152) enfermé dans un carter (154) et comportant une chambre de combustion (158), et
- au moins une canalisation d'alimentation (170) destinée à acheminer du dihydrogène jusqu'à la chambre de combustion (158) où ladite au moins une canalisation d'alimentation (170) serpente à l'extérieur du carter (152) avant de plonger dans la chambre de combustion (158) à travers le carter (154) par l'intermédiaire d'au moins un injecteur (182),
l'ensemble propulsif (151) étant **caractérisé en ce qu'**il comporte en outre un boîtier (184, 484) fixé au carter (154) de manière étanche autour de celui-ci, où ladite au moins une canalisation d'alimentation (170) comporte une partie amont (170a) et une partie aval (170b) fluidiquement connectées l'une à l'autre à travers une paroi (183) du boîtier (184, 484), où la partie amont (170a) est destinée à être fluidiquement connectée à un réservoir (172) et fixée de manière étanche à ladite paroi (183) du boîtier (184, 484) et où la partie aval (170b) est logée à l'intérieur du boîtier (184, 484) et fixée de manière étanche à ladite paroi (183) du boîtier (184, 484) et où le au moins un injecteur (182) est également logé à l'intérieur du boîtier (184, 484).

2. Ensemble propulsif (151) selon la revendication 1, **caractérisé en ce qu'**il comporte au moins un détecteur de dihydrogène (820) arrangé dans le boîtier (184), une unité de contrôle (822) connectée audit au moins un détecteur (820) et une électrovanne (824) montée sur la canalisation d'alimentation (170) et commandée en ouverture et en fermeture par ladite unité de contrôle (822) en fonction des données transmises par ledit au moins un détecteur (820).

3. Ensemble propulsif (151) selon l'une des revendications 1 ou 2, **caractérisé en ce que** le boîtier (184) est constitué de deux coques (184a-b) qui sont fixées de manière étanche l'une à l'autre au niveau d'un plan médian vertical P (XZ) de l'ensemble propulsif (151) formant ainsi un volume (300) entre les deux coques (184a-b) et le carter (154).

4. Ensemble propulsif (151) selon l'une des revendications 1 ou 2, **caractérisé en ce que** le boîtier (484) est constitué de deux coques (484a-b) où chacune est fixée de manière étanche au carter (154) au niveau d'un plan parallèle à un plan médian vertical P (XZ) de l'ensemble propulsif (151) formant entre chaque coque (484a-b) et le carter (154), un volume (400a-b).

5. Ensemble propulsif (151) selon l'une des revendications 1 à 4, **caractérisé en ce que** ladite ou chaque partie aval (170b) est fluidiquement connectée à une partie amont (170a) par plusieurs zones de connexion (502a-c).

6. Ensemble propulsif (151) selon l'une des revendications 1 à 5, **caractérisé en ce que** le boîtier (184, 484) est rempli de diazote.

7. Ensemble propulsif (151) selon l'une des revendications 3 ou 4, **caractérisé en ce que** pour chaque volume (300, 400a-b), l'ensemble propulsif (151) comporte une canalisation d'entrée (602) et une canalisation de sortie (604) fluidiquement connectées audit volume (300, 400a-b), où la canalisation d'entrée (602) est destinée à introduire le diazote dans ledit volume (300, 400a-b) et où la canalisation de sortie (604) est destinée à extraire le diazote dudit volume (300, 400a-b).

8. Ensemble propulsif (151) selon l'une des revendications 3 ou 4 lorsqu'elle dépend de la revendication 2, **caractérisé en ce que** l'ensemble propulsif (151) comporte pour chaque volume (300, 400a-b), au moins un moyen d'allumage (702) logé dans ledit volume (300, 400a-b) et commandé par l'unité de contrôle (822) pour générer une étincelle lorsqu'un détecteur de dihydrogène (820) dudit volume (300, 400a-b) détecte du dihydrogène.

9. Aéronef (100) comportant une aile (104), un réservoir de dihydrogène (172), au moins un ensemble propulsif (151) selon l'une des revendications précédentes et pour chaque ensemble propulsif (151), un châssis (180) où l'ensemble propulsif (151) est fixé au châssis (180) qui est fixé à l'aile (104) et où ladite au moins une canalisation d'alimentation (170) est fluidiquement connectée au réservoir de dihydrogène (172).

## Patentansprüche

1. Antriebseinheit (151) für ein Luftfahrzeug (100), umfassend:
- ein Motorisierungssystem (150), das einen Kern (152) umfasst, der in einem Gehäuse (154) eingeschlossen ist und eine Brennkammer (158) umfasst, und
- mindestens eine Versorgungsleitung (170), die dazu bestimmt ist, Diwasserstoff bis zu der Brennkammer (158) zu leiten, wobei sich die mindestens eine Versorgungsleitung (170) außerhalb des Gehäuses (152) schlängelt, bevor sie durch das Gehäuse (154) hindurch über mindestens eine Einspritzdüse (182) in die Brennkammer (158) eintritt, wobei die Antriebseinheit (151) **dadurch gekennzeichnet ist, dass** sie ferner eine Einhausung (184, 484) umfasst, die an dem Gehäuse (154) dicht um dieses herum befestigt ist, wobei die mindestens eine Versorgungsleitung (170) einen stromaufwärtigen Teil (170a) und einen stromabwärtigen Teil (170b) umfasst, die durch eine Wand (183) der Einhausung (184, 484) hindurch fluidisch miteinander verbunden sind, wobei der stromaufwärtige Teil (170a) dazu bestimmt ist, fluidisch mit einem Tank (172) verbunden zu sein und dicht an der Wand (183) der Einhausung (184, 484) befestigt zu sein, und wobei der stromabwärtige Teil (170b) im Inneren der Einhausung (184, 484) aufgenommen ist und dicht an der Wand (183) der Einhausung (184, 484) befestigt ist und wobei die mindestens eine Einspritzdüse (182) ebenfalls im Inneren der Einhausung (184, 484) aufgenommen ist.

2. Antriebseinheit (151) nach Anspruch 1, **dadurch gekennzeichnet, dass** sie mindestens einen Diwasserstoffdetektor (820) umfasst, der in der Einhausung (184) angeordnet ist, eine Steuerungseinheit (822), die mit dem mindestens einen Detektor (820) verbunden ist, und ein Magnetventil (824), das an der Versorgungsleitung (170) montiert ist und dessen Öffnen und Schließen durch die Steuerungseinheit (822) in Abhängigkeit von den von dem mindestens einen Detektor (820) übertragenen Daten gesteuert wird.

3. Antriebseinheit (151) nach einem der Ansprüche 1 oder 2, **dadurch gekennzeichnet, dass** die Einhausung (184) aus zwei Schalen (184a-b) besteht, die an einer vertikalen Mittelebene P (XZ) der Antriebseinheit (151) dicht aneinander befestigt sind, so dass ein Volumen (300) zwischen den beiden Schalen (184a-b) und dem Gehäuse (154) gebildet wird.

4. Antriebseinheit (151) nach einem der Ansprüche 1 oder 2, **dadurch gekennzeichnet, dass** die Einhausung (484) aus zwei Schalen (484a-b) besteht, wobei jede an einer Ebene, die parallel zu einer vertikalen Mittelebene P (XZ) der Antriebseinheit (151) verläuft, dicht an dem Gehäuse (154) befestigt ist, so dass zwischen jeder Schale (484a-b) und dem Gehäuse (154) ein Volumen (400ab) gebildet wird.

5. Antriebseinheit (151) nach einem der Ansprüche 1 bis 4, **dadurch gekennzeichnet, dass** der oder jeder stromabwärtige Teil (170b) mit einem stromaufwärtigen Teil (170a) durch mehrere Verbindungsbereiche (502a-c) fluidisch verbunden ist.

6. Antriebseinheit (151) nach einem der Ansprüche 1 bis 5, **dadurch gekennzeichnet, dass** die Einhausung (184, 484) mit Distickstoff gefüllt ist.

7. Antriebseinheit (151) nach einem der Ansprüche 3 oder 4, **dadurch gekennzeichnet, dass** die Antriebseinheit (151) für jedes Volumen (300, 400a-b) eine Eintrittsleitung (602) und eine Austrittsleitung (604) umfasst, die fluidisch mit dem Volumen (300, 400a-b) verbunden sind, wobei die Eintrittsleitung (602) dazu bestimmt ist, den Distickstoff in das Volumen (300, 400ab) einzuführen, und wobei die Austrittsleitung (604) dazu bestimmt ist, den Distickstoff aus dem Volumen (300, 400a-b) herauszuführen.

8. Antriebseinheit (151) nach einem der Ansprüche 3 oder 4, wenn abhängig von Anspruch 2, **dadurch gekennzeichnet, dass** die Antriebseinheit (151) für jedes Volumen (300, 400a-b) mindestens ein Zündmittel (702) umfasst, das in dem Volumen (300, 400a-b) aufgenommen ist und durch die Steuerungseinheit (822) gesteuert wird, um einen Funken zu erzeugen, wenn ein Diwasserstoffdetektor (820) des Volumens (300, 400a-b) Diwasserstoff detektiert.

9. Luftfahrzeug (100), das eine Tragfläche (104), einen Diwasserstofftank (172), mindestens eine Antriebseinheit (151) nach einem der vorhergehenden Ansprüche und für jede Antriebseinheit (151) einen Rahmen (180) umfasst, wobei die Antriebseinheit (151) an dem Rahmen (180) befestigt ist, der an der Tragfläche (104) befestigt ist, und wobei mindestens eine Versorgungsleitung (170) mit dem Diwasserstofftank (172) fluidisch verbunden ist.

## Claims

1. Propulsion assembly (151) for an aircraft (100), having:
- a propulsion system (150) having a core (152) enclosed in a casing (154) and having a combustion chamber (158), and
- at least one supply pipe (170) intended to convey dihydrogen to the combustion chamber (158) wherein said at least one supply pipe (170) meanders outside the casing (152) before dropping into the combustion chamber (158) through the casing (154) via at least one injector (182),
the propulsion assembly (151) being **characterized in that** it further comprises a housing (184, 484) fastened to the casing (154) in a sealed manner around the latter, wherein said at least one supply pipe (170) has an upstream part (170a) and a downstream part (170b) that are fluidically connected to one another through a wall (183) of the housing (184, 484), wherein the upstream part (170a) is intended to be fluidically connected to a tank (172) and fastened in a sealed manner to said wall (183) of the housing (184, 484) and wherein the downstream part (170b) is housed inside the housing (184, 484) and fastened in a sealed manner to said wall (183) of the housing (184, 484) and wherein the at least one injector (182) is also housed inside the housing (184, 484).

2. Propulsion assembly (151) according to Claim 1, **characterized in that** it has at least one dihydrogen detector (820) arranged in the housing (184), a control unit (822) connected to said at least one detector (820) and a solenoid valve (824) mounted on the supply pipe (170) and commanded to open and close by said control unit (822) according to the data transmitted by said at least one detector (820).

3. Propulsion assembly (151) according to either of Claims 1 and 2, **characterized in that** the housing (184) is constituted of two shells (184a-b) that are fastened in a sealed manner to one another at a vertical median plane P (XZ) of the propulsion assembly (151), thus forming a volume (300) between the two shells (184a-b) and the casing (154).

4. Propulsion assembly (151) according to either of Claims 1 and 2, **characterized in that** the housing (484) is constituted of two shells (484a-b) wherein each one is fastened in a sealed manner to the casing (154) at a plane parallel to a vertical median plane P (XZ) of the propulsion assembly (151), forming, between each shell (484a-b) and the casing (154), a volume (400a-b).

5. Propulsion assembly (151) according to one of Claims 1 to 4, **characterized in that** said or each downstream part (170b) is fluidically connected to an upstream part (170a) by a plurality of connection zones (502a-c).

6. Propulsion assembly (151) according to one of Claims 1 to 5, **characterized in that** the housing (184, 484) is filled with dinitrogen.

7. Propulsion assembly (151) according to either of Claims 3 and 4, **characterized in that**, for each volume (300, 400a-b), the propulsion assembly (151) has an inlet pipe (602) and an outlet pipe (604) that are fluidically connected to said volume (300, 400a-b), wherein the inlet pipe (602) is intended to introduce the dinitrogen into said volume (300, 400a-b) and wherein the outlet pipe (604) is intended to extract the dinitrogen from said volume (300, 400a-b).

8. Propulsion assembly (151) according to either of Claims 3 and 4 when it is dependent on Claim 2, **characterized in that** the propulsion assembly (151) has, for each volume (300, 400a-b), at least one ignition means (702) housed in said volume (300, 400a-b) and controlled by the control unit (822) so as to generate a spark when a dihydrogen detector (820) of said volume (300, 400a-b) detects dihydrogen.

9. Aircraft (100) having a wing (104), a dihydrogen tank (172), at least one propulsion assembly (151) according to one of the preceding claims and, for each propulsion assembly (151), a chassis (180) wherein the propulsion assembly (151) is fastened to the chassis (180) that is fastened to the wing (104) and wherein said at least one supply pipe (170) is fluidically connected to the dihydrogen tank (172).
